# EUROPÄISCHE PATENTSCHRIFT

(11) **EP 4 422 999 B1**
(45) Veröffentlichungstag und Bekanntmachung des Hinweises auf die Patenterteilung: **14.10.2026**
(21) Anmeldenummer: 22809399.3
(22) Anmeldetag: 26.10.2022
(51) Int. Cl.: B66C 9/08

(54) **RADBLOCK, INSBESONDERE FÜR EINEN LAUFKRAN**
WHEEL BLOCK, IN PARTICULAR FOR A TRAVELLING CRANE
BLOC ROUE, EN PARTICULIER POUR UN PONT ROULANT

(30) Priorität: 28.10.2021 DE 102021128150
(43) Veröffentlichungstag der Anmeldung: 04.09.2024
(73) Patentinhaber: Konecranes Global Corporation, 05830 Hyvinkää (FI)
(72) Erfinder: PIEPER, Lukas, 44795 Bochum (DE); SAGURNA, Moritz, 44807 Bochum (DE)
(74) Vertreter: Moser Götze & Partner Patentanwälte mbB
(86) Internationale Anmeldenummer: PCT/EP2022/079876
(87) Internationale Veröffentlichungsnummer: WO 2023/072987

(56) Entgegenhaltungen:
- CN-A- 112 027 915
- CN-A- 112 816 229
- CN-A- 112 985 846
- DE-A1- 102019 210 884

## Beschreibung

Die Erfindung betrifft einen Radblock gemäß dem Oberbegriff von Anspruch 1.

Ein derartiger Radblock ist beispielsweise aus der DE 10 2004 008 552 B3, der DE 19 540 217 C1 oder der DE 31 34 750 C2 bekannt.

Infolge von Verschleiß an dem Rad eines solchen Radblocks, welches beispielsweise an einem Laufkran-Fahrwerksträger montiert ist, können Defekte und gegebenenfalls ein hierdurch resultierender Unfall entstehen. Um dies zu vermeiden, ist ein rechtzeitiger Austausch des verschlissenen Rades erforderlich. Eine Möglichkeit zur Überprüfung des Verschleißes besteht darin, dass der Radblock demontiert und in seine Komponenten zerlegt wird. Anschließend kann das Rad bezüglich Verschleiß untersucht werden. Alternativ kann der Verschleiß über Markierungen untersucht werden, indem zunächst eine Markierung des Aufstandpunktes des Rades auf der Schiene an beiden Teilen vorgenommen wird. Anschließend wird eine Umdrehung des Rades veranlasst, um eine weitere Markierung auf der Schiene anzubringen und den Abstand zwischen den Markierungen zu messen. Hieraus erfolgt dann eine Ableitung des Radumfanges und Durchmessers und somit des etwaigen Verschleißes.

Aus der JP 2017 146 227 A ist ein Laufkran mit einem System zur Erkennung von Verschleiß an dessen Laufrädern bekannt. Das System umfasst zwei Laser-Entfernungsmesser, Reflektoren und eine Steuerung. Nachteil einer solchen Lösung ist ein vergleichsweise hoher Kosten- und Betriebsaufwand und eine vergleichsweise geringe Robustheit des Systems gegen mechanische Einflüsse, wie Vibrationen.

Aus der CN 112 816 229 A sowie aus der CN 112 985 846 A sind Systeme zur Erkennung von Verschleiß an Kran-Laufrädern bekannt, wobei das jeweilige Laufrad nicht in einem Gehäuse eines Radblocks gelagert und somit uneingehaust ist.

Ausgehend von diesem Stand der Technik liegt der vorliegenden Erfindung die Aufgabe zugrunde, für einen gattungsgemäßen Radblock eine vorausschauende Wartung bei geringem Überprüfungsaufwand und gleichzeitig eine zuverlässige Belastungs- und insbesondere Überlasterkennung und -ermittlung zu ermöglichen.

Diese Aufgabe wird durch einen Radblock mit den Merkmalen des Anspruchs 1 gelöst. Vorteilhafte Ausgestaltungen der Erfindung sind in den abhängigen Ansprüchen sowie der nachfolgenden Beschreibung angegeben.

Erfindungsgemäß wird bei einem Radblock, der ein Gehäuse sowie ein in dem Gehäuse gelagertes und aus dem Gehäuse heraus ragendes Rad umfasst, wobei das Gehäuse des Radblocks kastenförmig ausgebildet und an seiner Unterseite offen ist, wobei das Rad dort durch eine Öffnung heraus ragt und ansonsten von den übrigen Seitenwänden des Gehäuses umschlossen ist, eine vorausschauende Wartung bei geringem Überprüfungsaufwand und gleichzeitig eine zuverlässige Belastungs- und insbesondere Überlasterkennung und -ermittlung dadurch ermöglicht, dass der Radblock eine berührungslos arbeitende Messvorrichtung zur Ermittlung des Abstands zwischen der Messvorrichtung und dem Rad aufweist, um anhand von Messsignalen bzw. Messdaten der Messvorrichtung und deren Auswertung etwaigen aktuellen und/oder zukünftigen Verschleiß an dem Rad und/oder eine Belastung, insbesondere einen unbelasteten Zustand oder einen Überlastzustand, des Radblocks zu erkennen und/oder zu ermitteln und/oder zu prognostizieren wobei die Messvorrichtung zwischen einer Innenwand des Gehäuses und dem Rad angeordnet und an der Innenwand angebracht ist.

Die Messvorrichtung ist dabei vorzugsweise in dem Gehäuse verbaut. Der Radblock und insbesondere dessen Rad kann durch eine Antriebseinheit, insbesondere mit einem Elektromotor, angetrieben sein. Der erfindungsgemäße Radblock ist optional für einen Kran verwendbar, insbesondere für einen Laufkran, beispielsweise ein Brückenkran oder Portalkran, der typischerweise schienengebunden verfahrbar ist, wobei das Rad des Radblocks als eines von mehreren Laufrädern des Krans mit der Schiene in Kontakt ist und auf dieser abrollt.

Das in dem Gehäuse gelagerte Rad ist um eine in üblicher Einbaulage des Rades horizontal ausgerichtete Drehachse drehbar. Das Rad ist vorzugsweise mittels einer Nabe gelagert, welche seitlich jeweils in einem Gleit- und/oder Wälzlager, die in das Gehäuse eingesetzt sind, gehalten wird.

Mittels der am bzw. im Gehäuse gelagerten und somit in das Gehäuse bzw. den Radblock integrierten und permanent vorhandenen Messvorrichtung ist der Verschleiß bzw. die Belastung des Rades in einem eingebauten Zustand des Rades erkennbar und/oder ermittelbar. Hierzu wird jeweils der Abstand zwischen der Messvorrichtung und dem Rad, insbesondere dessen Lauffläche, gemessen und hieraus beziehungsweise aus deren Veränderungen Rückschlüsse auf Form und/oder Durchmesser des Rades und damit aktuellen oder zukünftigen Verschleiß und/oder die Belastung gezogen. Die Lauffläche ist am Umfang des Rades angeordnet und dient insbesondere dem Kontakt zwischen dem Rad und einer Schiene. Auch kann die Lauffläche, insbesondere beidseitig, durch einen Spurkranz begrenzt sein. Beim Verfahren des Rades tritt durch Abrieb an der Lauffläche Verschleiß auf, der zu den messbaren Veränderungen von Form und/oder Durchmesser führt und in der Folge zu verschlechtertem Laufverhalten bis hin zum Ausfall des Rades führt.

Mittels der Messvorrichtung kann damit also nicht nur der aktuelle oder zukünftige Verschleiß des Rades ermittelt bzw. prognostiziert werden, sondern auch die Belastung des Radblocks ermittelt und insbesondere eine etwaige Überlastung erkannt werden. Mit anderen Worten kann die Messvorrichtung als Lastsensor genutzt werden. Weder eine Demontage des Radblocks, insbesondere ein Ausbau des Rades, noch ein vom Radblock getrenntes, separates Messinstrument sind hierfür erforderlich.

Erkennung oder erkennbar bedeutet im Rahmen der Erfindung, dass identifizierbar ist, dass Verschleiß oder ein Überlastzustand des Rades vorliegt. Ermittlung oder ermittelbar bedeutet im Rahmen der Erfindung, dass der Verschleiß des Rades oder die Belastung im Überlastzustand des Radblocks quantifizierbar und somit bezifferbar ist.

Um die Messvorrichtung als Lastsensor zu nutzen, ist eine Kalibrierung erforderlich. Hierfür wird mit einer ersten Messung der Abstand in unbelastetem Zustand gemessen und optional in einer Speichereinheit gespeichert. Die Messung zeigt an, wie der aktuelle Abstand ohne Krafteinwirkung zu diesem Zeitpunkt ist. Sie dient als Referenzwert für die Abweichung unter Last. Während dieser Messung ist es von Vorteil, wenn der Radblock in Bewegung ist, das Rad also beispielsweise auf einer Schiene abrollt, um einen möglichst genauen Wert zu erhalten.

Anschließend können eine oder mehrere Messungen unter Lasteinwirkung für eine Lastermittlung sowie die optionale Festlegung eines Grenzwerts hierfür erfolgen, womit sich eine Überlastsicherung realisieren lässt. Dabei kann der Radblock als Feder-Dämpfer System betrachtet werden, welches sich proportional zu der Gewichtskraft bzw. der Lasteinwirkung durch die jeweilige Belastung einfedert. Je nach Belastung verringert sich der Abstand von Messvorrichtung zum Rad. Die Differenz zwischen der ersten Messung im unbelasteten Zustand und der zweiten oder der jeweiligen weiteren Messung unter Lasteinwirkung ist die Basis für die Gewichtsberechnung. Der Zusammenhang zwischen der Auslenkung bzw. Änderung der messbaren Abstände und der Gewichtskraft bzw. Belastung wurde empirisch aus Versuchen gewonnen. An dieser Stelle wird die berechnete Auslenkung mit den empirischen Daten abgeglichen. Die Bedienperson kann anschließend die Belastung und insbesondere das entsprechende Gewicht als Information abrufen bzw. auf einer unten näher beschriebenen Anzeige visualisiert bekommen. Aufgrund der erforderlichen Berechnung des Wertes ist diese Anwendung besonders vorteilhaft im Rahmen der unten näher beschriebenen online-Auswertung nutzbar.

Auch ein gewünschter Grenzwert kann festgelegt und gespeichert werden, was insbesondere auch eine einfache Erkennung eines Überlastzustandes ohne Quantifizierung der aktuellen Belastung ermöglicht. Dadurch kann auch in der unten näher beschriebenen offline-Auswertung ein Überlastzustand als Information ausgegeben werden, beispielsweise durch eine LED-Lampe oder ein anderes einfaches Leuchtmittel, das im Sinne einer Warnleuchte den Überlastzustand anzeigt.

Die Messungen, die Speicherung und Auswertung der Messsignale bzw. Messdaten der Messvorrichtung, insbesondere durch Einbindung der unten beschriebenen Speichereinheit und/oder Auswerteeinheit, kann insbesondere rechnergestützt erfolgen. Die Messvorrichtung kann ihre Messungen daher auch mit vorgegebener und insbesondere einstellbarer Frequenz diskontinuierlich, beispielsweise verteilt über mehrere Tage, oder auch kontinuierlich durchführen. Entsprechendes gilt für die Auswertung der Messsignale bzw. Messdaten.

In vorteilhafter Weise kann die Messvorrichtung mittels eines isolierten und insbesondere abgeschirmten Kabels angeschlossen sein, welches dann wiederum Teil der signalübertragenden Verbindung mit der Speichereinheit und/oder Auswerteeinheit sein kann. Das Kabel ist hierfür innerhalb des Gehäuses über eine Führung, die Teil der unten näher beschriebenen Befestigungsvorrichtung für die Messvorrichtung sein kann, zu einer Außenwandbohrung in dem Gehäuse und durch diese aus dem Gehäuse herausgeführt. Über das Kabel können die Messsignale bzw. Messdaten mit der vorgegebenen Frequenz ausgelesen und für die Auswertung in der Auswerteeinheit oder zuvor zur Zwischenspeicherung in der Speichereinheit bereitgestellt werden.

Im Gegensatz zu kontaktbehafteten Messvorrichtungen mit mechanischen Fühlern, lassen sich Messungenauigkeiten aufgrund von Verschleiß des Fühlers durch die erfindungsgemäße berührungslos arbeitende Messvorrichtung vermeiden, was eine zuverlässigere Messung ermöglicht. Des Weiteren ergibt sich als Vorteil, dass die Messung bzw. Abstandsermittlung und darauf basierende Auswertung, insbesondere Prüfung des Rads hinsichtlich seines Zustands (Belastung und/oder Verschleiß), auf Distanz ohne Demontage und ohne Monteur sowie insbesondere von außerhalb des Radblocks durchgeführt werden kann.

In besonders vorteilhafter Weise ist vorgesehen, dass die Messvorrichtung einen induktiven Abstandssensor, vorzugsweise einen analogen induktiven Abstandssensor, umfasst. Ein solcher Abstandssensor zeichnet sich dadurch aus, dass seine Funktionalität im Vergleich zu anderen berührungslosen Abstandssensoren nicht durch eine erhöhte Staubbildung oder Bildung von Ablagerungen (z.B. von Spänen, Partikeln oder Abrieb hervorgerufen), was insbesondere bei industriellen Applikationen unvermeidbar ist, beeinträchtigt wird. Ein weiterer Vorteil gegenüber anderen berührungslosen Abstandssensoren ist, dass ein induktiver Abstandssensor kostengünstiger in der Beschaffung ist.

In konstruktiv einfacher Weise ist vorgesehen, dass die Messvorrichtung so positioniert ist, dass sie in der Einbaulage des Radblocks oberhalb oder oberhalb und seitlich der Drehachse des Rades liegt. Aufgrund von Materialablagerungen, die insbesondere betriebsbedingt im Gehäuse und auf der Messvorrichtung entstehen können, könnte es ansonsten zu falschen Messergebnissen kommen. Vorzugsweise ist die Messvorrichtung dabei auch so angeordnet, dass sie am unteren Ende ihres Messbereichs liegt, wobei dieser den Abstand zwischen der Messvorrichtung und dem Rad, insbesondere dessen Lauffläche, bei Erreichen der Verschleißgrenze definiert, welche abhängig von der Baugröße des Radblocks ist und beispielsweise zwischen 0 und 5 mm liegen kann. Mit anderen Worten ist die Messvorrichtung also so anzubringen, dass ein der Verschleißgrenze des Rads entsprechender Abstand noch sicher erfasst werden kann.

In weiterer Ausgestaltung des Radblocks kann ferner vorgesehen sein, dass die Messvorrichtung mittels einer Befestigungsvorrichtung, vorzugsweise umfassend ein, insbesondere blockförmiges, Formelement und/oder einen Distanzblock und/oder eine Befestigungsstrebe, vorzugsweise in Form eines Halteblechs, an einem Abschnitt der Innenwand angebracht ist. Dabei bildet der zur Anbringung genutzte Abschnitt der Innenwand rückseitig eine Außenwand des Gehäuses aus oder der Abschnitt der Innenwand ist Teil eines, vorzugsweise symmetrischen, Innenprofils des Gehäuses, wobei das Innenprofil als Versteifungselement und/oder Aufnahme für mindestens ein Verschraubungselement dient und hierfür beispielsweise entsprechende Bohrungen aufweisen kann. Die Befestigungsvorrichtung selbst kann ebenfalls mittels einer Schraubverbindung angebracht werden.

Eine Ausführungsform des Radblocks mit der mittels des Formelements befestigten Messvorrichtung zeichnet sich durch eine vorteilhaft einfache Befestigung aus, wobei bereits vorhandene Aufnahmen, insbesondere im von der Innenwand gebildeten Innenprofil, zur Herstellung einer Schraubenverbindung genutzt werden können und eine Materialschwächung der Außenwand des Gehäuses vermieden werden kann. Hierbei ist das Formelement vorzugsweise so ausgebildet, dass es eine zur, insbesondere gewölbten, Kontur des die Innenwand bildenden Innenprofils komplementäre Anlagefläche aufweist, um die Stabilität der Befestigung zu optimieren und die Genauigkeit der Abstandsmessung beeinträchtigende Vibrationen zu minimieren.

Eine vergleichsweise einfacher herzustellende Ausführungsform der Befestigungsvorrichtung wird durch den, vorzugsweise quaderförmigen, Distanzblock erreicht, insbesondere sofern dieser an dem rückseitig der Außenwand gebildeten Abschnitt der Innenwand des Gehäuses angebracht wird, beispielsweise oberhalb der Drehachse, wo kein Innenprofil als Versteifungselement und/oder Aufnahme für ein Verschraubungselement vorgesehen ist. Eine solche Befestigung der Messvorrichtung hat auch den Vorteil, dass der Distanzblock leicht im Radblock beziehungsweise dessen Gehäuse zu platzieren sowie bei Bedarf aufgrund seiner Geometrie einfach anzupassen ist.

Die Ausführungsform der Befestigungsvorrichtung, welche eine Befestigungsstrebe vorzugsweise in Form eines Halteblechs umfasst, ermöglicht in besonders vorteilhafter Weise eine einfache Führung bei Verwendung eines Kabels als Teil der signalübertragenden Verbindung zwischen der Messvorrichtung, der Speichereinheit und/oder der Auswerteeinheit. Zur Befestigung der Befestigungsstrebe können ähnlich wie für das Formelement bereits vorhandene Aufnahmepunkte, beispielsweise Aufnahmen im Innenprofil des Gehäuses genutzt werden und eine Nachbearbeitung des Gehäuses zur Optimierung einer Anlagefläche für ein Formelement oder einen Distanzblock sind nicht erforderlich. Vorzugsweise wird hier die Befestigungsstrebe mit ihren Enden unter Nutzung der Symmetrie des Gehäuses und auch des Innenprofils über zwei gegenüberliegende Aufnahmen für Verschraubungselemente mit dem Gehäuse verschraubt, wodurch sich auch ein symmetrischer Aufbau der Befestigungsstrebe ergibt. Die Messvorrichtung ist dabei zwischen den beiden Aufnahmepunkten bzw. Enden der Befestigungsstrebe an der Befestigungsstrebe befestigt.

Des Weiteren kann vorgesehen sein, dass das Gehäuse mindestens eine äußere Anschlussfläche mit mindestens einer Bohrung aufweist, über die das Gehäuse an einer Anschlusskonstruktion, vorzugsweise einem tragenden Strukturteil eines Laufkrans, insbesondere eines Fahrwerksträgers des Laufkrans, befestigbar ist, wobei das Gehäuse vorzugsweise zwei Gehäuseschalen umfasst, die vorzugsweise symmetrisch und identisch ausgebildet sind und zur Ausbildung des Gehäuses lösbar miteinander verbindbar sind, insbesondere mittels einer Verschraubung.

Gemäß der Erfindung ist das Gehäuse des Radblocks kastenförmig ausgebildet und hierbei an seiner Unterseite offen sein, wobei das Rad dort dann durch eine Öffnung heraus ragt und ansonsten von den übrigen, vorzugsweise fünf, Seitenwänden des Gehäuses umschlossen ist. Das Gehäuse kann hierbei aus mehreren Teilen in Form der Gehäuseschalen zusammengesetzt sein, vorzugsweise aus zwei gleichen Gehäusehälften, wodurch sich ein entsprechend symmetrischer Aufbau des Gehäuses ergibt.

Das Gehäuse kann dann an einer der Unterseite gegenüberliegenden Seite die auch als Kopfanschlussfläche(n) bezeichnete(n) Anschlussfläche(n) aufweisen, welche verwendet wird/werden, um den Radblock beispielsweise an einem Fahrwerksträger eines Krans anzuschließen. Die Anschlussfläche kann hierbei jeweils mittels einer Schraub- oder Bolzenverbindung an einer Gegenfläche zur Anlage gebracht werden, um den entsprechenden Anschluss, beispielsweise an den Fahrwerksträger oder der Antriebseinheit, herzustellen. Für die Schraub- oder Bolzenverbindung sind entsprechende Anschlussbohrungen vorgesehen, in welche dann entsprechende Schrauben oder Bolzen eingreifen.

Besonders vorteilhaft kann der erfindungsgemäße Radblock auch in System mit einer Auswerteeinheit und/oder einer Speichereinheit, eingesetzt werden. Dabei sind die Auswerteeinheit und/oder die Speichereinheit jeweils signalübertragend miteinander und/oder mit der Messvorrichtung verbindbar, um Messsignale bzw. Messdaten, insbesondere als Rohsignale bzw. Rohdaten, der Messvorrichtung mittels der Speichereinheit zu speichern und/oder mittels der Auswerteeinheit auszuwerten und durch die Auswertung ermittelte Informationen über den aktuellen und/oder prognostizierten Verschleiß des Rades, vorzugsweise einschließlich einer Berechnung von Wartungsintervallen, und/oder über eine Belastung, insbesondere einen unbelasteten Zustand und/oder einen Überlastzustand, des Radblocks mittels der Speichereinheit zu speichern.

Die Speichereinheit kann dabei einen cloudbasierten Webserver und/oder einen lokalen Datenträger umfassen, um die Messsignale bzw. Messdaten und/oder die durch deren Auswertung ermittelten Informationen zu speichern. Auch kann die Speichereinheit zumindest teilweise Teil der Auswerteeinheit sein.

Außerdem ist vorgesehen, dass die Auswerteeinheit und/oder die Speichereinheit signalübertragend mit einer Anzeige verbindbar sind, um einer Bedienperson die Messsignale bzw. Messdaten und/oder die durch die Auswertung ermittelten Informationen anzuzeigen. Dabei kann die Anzeige zur Visualisierung der Messsignale bzw. Messdaten und/oder Informationen einen Bildschirm und/oder oder mindestens ein Leuchtmittel, vorzugsweise mindestens eine LED-Lampe, zur Anzeige von, vorzugsweise verschiedenfarbigen, Lichtsignalen aufweisen.

Dadurch lassen sich in vorteilhafter Weise eine offline- und eine online-Auswertung realisieren.

Bei der online Auswertung werden die erforderlichen Daten auf der Speichereinheit, beispielsweise einem cloudbasierten Webserver, gespeichert, welcher dann als Backend für die GUI (Graphical User Interface) der Kundenapplikation dient und der jeweiligen Bedienperson beispielsweise auf einem als Anzeige dienenden Bildschirm eines Smartphones oder Tablets visualisiert wird. Dies ermöglicht eine temporäre Verbindung des Smartphones oder Tablets oder eines anderen Endgeräts, z.B. eines Laptops oder PC's, mit der Speichereinheit und damit ein ortsunabhängiges Abrufen und/oder Visualisieren der Messsignale bzw. Messdaten und/oder Informationen. Hierdurch wird einer Bedienperson ermöglicht, das Ergebnis der Erkennung und/oder Ermittlung des Verschleißes und/oder der Belastung wahrzunehmen, ohne dass eine Anwesenheit am Radblock oder dessen Zerlegen in seine Komponenten erforderlich ist.

Je nach Grad des Verschleißes werden beispielsweise als Information über den Status seines Radblocks eine zu erwartende Lebenszeit und ein Termin für ein Serviceintervall für den Radblock angezeigt. Des Weiteren können optional folgende drei Status Meldungen angezeigt werden: "Rad ist in Ordnung", "Rad muss demnächst gewechselt werden" und "Rad ist verschlissen".

Ähnlich wie bei der online-Auswertung können auch mit der offline-Auswertung drei Status Meldungen definiert und mittels des mindestens einen Leuchtmittels angezeigt werden, beispielsweise in Form einer oder mehrerer Signal LEDs am Radblock oder dessen Gehäuse. In dieser Ausführung steht dann beispielsweise eine grün leuchtende LED-Lampe für die Anzeige "Rad ist in Ordnung", eine gelbe LED-Lampe für "Rad muss demnächst gewechselt werden" und eine rote LED-Lampe für "Rad ist verschlissen". Im Gegensatz zu der online-Auswertung ist die offline-Auswertung insbesondere vorteilhaft für eine besonders schnelle und einfache Anzeige des Verschleiß-Status.

Vorteilhaft wird zudem ein Laufkran, insbesondere Brückenkran oder Portalkran, dadurch verbessert, dass dieser einen erfindungsgemäßen Radblock oder ein erfindungsgemäßes System umfasst. Die hierfür jeweils beschriebenen Vorteile gelten für den Laufkran entsprechend.

Der Fahrwerksträger kann sowohl bei einem Kran als auch bei anderen Anwendungen beispielsweise als T-Träger, Doppel-T-Träger, Kasten-Träger, L-Profil-Träger oder C-Profil-Träger ausgebildet sein. An einem einzigen Fahrwerksträger können mehrere erfindungsgemäße Radblöcke angeordnet sein. Bei zwei Radblöcken sind diese insbesondere in einer Laufrichtung der Laufräder hintereinander angeordnet. Selbstverständlich ist es denkbar, dass die Radblöcke auch bezüglich der Laufrichtung der Laufräder nebeneinander angeordnet sind. Auch eine Kombination aus beidem ist möglich.

Im Falle einer Krananwendung kann der Fahrwerksträger an einer Brücke eines Laufkrans oder einer Stütze eines Portalkrans und/oder einer Kranlaufkatze des Laufkrans oder Portalkrans angeordnet sein. Selbstverständlich sind der erfindungsgemäße Radblock und das erfindungsgemäße System auch an anderen Krantypen einsetzbar.

Außerdem wirken sich die erfindungsgemäßen Vorteile auch bei einem Verfahren zum Betreiben eines solchen Systems oder Krans, insbesondere Laufkrans, aus. Dementsprechend kann dabei die Auswerteeinheit Messsignale bzw. Messdaten, insbesondere als Rohsignale bzw. Rohdaten, der Messvorrichtung erhalten und in einer definierten Auswertungsfrequenz auswerten, um etwaigen aktuellen und/oder zukünftigen Verschleiß an dem Rad und/oder die Belastung des Radblocks zu erkennen und/oder zu ermitteln und/oder zu prognostizieren. Alternativ oder zusätzlich werden dabei auch Messsignale bzw. Messdaten, insbesondere als Rohsignale bzw. Rohdaten, der Messvorrichtung und/oder durch deren Auswertung mittels der Auswerteeinheit ermittelte Informationen über den aktuellen und/oder prognostizierten Verschleiß des Rades, vorzugsweise einschließlich einer Berechnung von Wartungsintervallen, und/oder über die Belastung des Radblocks mittels der Speichereinheit gespeichert.

In weiterer Ausgestaltung ist vorgesehen, dass zur Auswertung einer oder mehrere der folgenden Schritte durchgeführt werden:
- Bilden von arithmetischen Mittelwerten der Messsignale bzw. Messdaten, insbesondere der Rohsignale bzw. Rohdaten
- Nutzen der Mittelwerte für die Generierung von Grenzwerten und/oder Grenzbereichen des Verschleißes und/oder der Belastung
- Nutzen eines Filterverfahrens, insbesondere mit einem Hoch- und/oder Tiefpassfilter, für die Generierung von Grenzwerten und/oder Grenzbereichen des Verschleißes und/oder der Belastung
- Nutzen von statistischen Glättungsverfahren, insbesondere des 3 Punkt Median Verfahrens, um die während des Betriebs aufgrund von Unebenheiten oder elektronischen Messsignalstörungen auftretenden Extremwerte und Ausreißer zu eliminieren
- Erstellen von Informationen über den aktuellen und/oder prognostizierten Verschleiß des Rades, vorzugsweise einschließlich einer Berechnung von Wartungsintervallen, und/oder über die Belastung des Radblocks.

In vorteilhafter Weise lassen sich durch kontinuierliches Auswerten der Messsignale bzw. Messdaten die Wartungsintervalle besonders zuverlässig und insbesondere anwendungs- oder kundenspezifisch bestimmen, da das Verschleißverhalten des Rades unter den jeweiligen Lastbedingungen gespeichert wird.

Die Messsignale bzw. Messdaten und/oder die durch die Auswertung ermittelten Informationen können dann wie oben bereits beschrieben von einer Bedienperson abgerufen und/oder einer Bedienperson über die Anzeige visualisiert werden.

Weitere Details der Erfindung ergeben sich aus der nachfolgenden Beschreibung von Ausführungsbeispielen anhand der Zeichnung, in der
Figur 1 eine schematische perspektivische Ansicht eines Laufkrans,
Figur 2 eine schematische perspektivische Ansicht eines Radblocks,
Figuren 3a und 3b einen Querschnitt durch den Radblock mit einer mittels einer Befestigungsvorrichtung mit Formelement befestigten Messvorrichtung,
Figuren 4a und 4b einen Querschnitt durch den Radblock mit einer mittels einer Befestigungsvorrichtung mit Distanzblock befestigten Messvorrichtung und
Figuren 5a und 5b einen Querschnitt durch den Radblock mit einer mittels einer Befestigungsvorrichtung mit Halteblech befestigten Messvorrichtung zeigen.

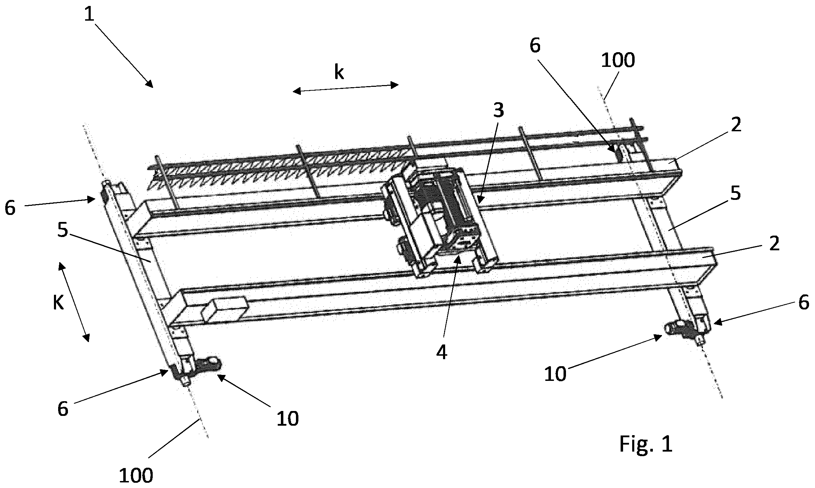

Die Figur 1 zeigt eine schematische perspektivische Ansicht eines Laufkrans 1, der hier beispielhaft als sogenannter Zwei-Träger-Brückenkran ausgebildet ist. Der Laufkran 1 ist auf einem Schienenweg mit zwei zueinander parallelen und voneinander beabstandeten, auch als Radbahn bezeichneten, Schienen 100 (schematisch durch strichpunktierte Linien angedeutet) im Wesentlichen horizontal in einer Kranfahrrichtung K verfahrbar.

Der Laufkran 1 umfasst zwei parallel und mit Abstand zueinander verlaufende Kastenträger 2, die beispielhaft einen horizontalen Kranträger ausbilden und als Fahrweg für eine Laufkatze 3 mit einem Hebezeug 4 dienen. Hierbei verfährt die Laufkatze 3 auf den Kastenträgern 2 in einer horizontalen Katzfahrrichtung k, die rechtwinklig zur Kranfahrrichtung K ausgerichtet ist. Entsprechend erstrecken sich die Kastenträger 2 ebenfalls in Katzfahrrichtung k. Alternativ kann auch nur ein einzelner Kastenträger 2 oder Doppel-T-Profil nach Art eines Ein-Träger-Brückenkrans vorgesehen sein. Die Laufkatze 3 verfährt dann beispielsweise an einem Untergurt des Kastenträgers 2. Zur Ausbildung des jeweiligen Kranträgers können Fachwerkträger anstelle von Kastenträgern 2 eingesetzt werden.

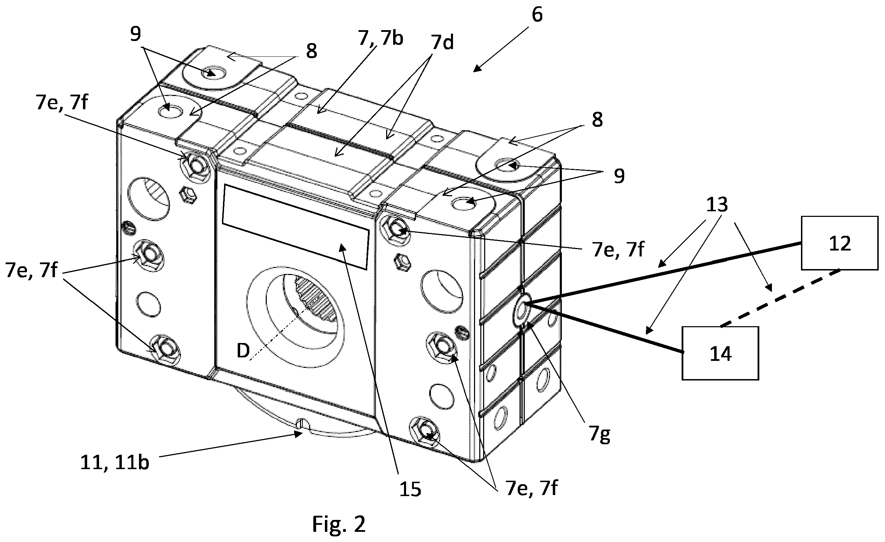

Die Kastenträger 2 liegen an ihren jeweiligen, gegenüberliegenden Enden auf quer dazu und somit in Kranfahrrichtung K verlaufenden Fahrwerksträgern 5 auf. An den gegenüberliegenden Enden der Fahrwerksträger 5 ist jeweils ein Radblock 6 angeordnet, von denen je Fahrwerksträger 5 mindestens einer der beiden Radblöcke 6 durch einen Elektromotor 10 angetrieben ist. Die Radblöcke 6 sind jeweils mit ihrem Rad 11 (siehe Figuren 2, 3a-b, 4a-b, 5a-b) auf den Schienen 100 in Kranfahrrichtung K verfahrbar. Selbstverständlich sind die Radblöcke 6 auch an anderen Krantypen als Teil seines Kranfahrwerks einsetzbar.

Die Figur 2 zeigt eine schematische perspektivische Ansicht eines Radblocks 6.

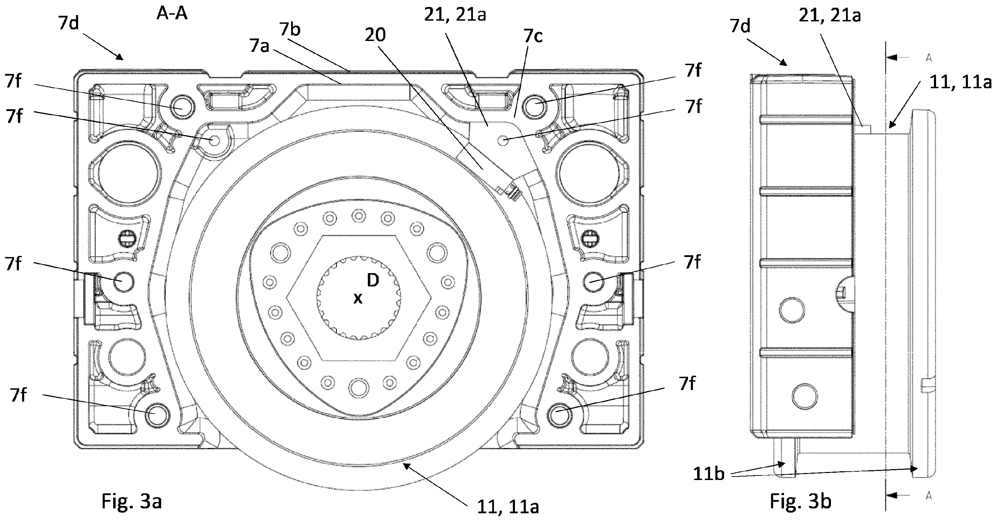

Der Radblock 6 weist, gemäß der Erfindung, ein kastenförmiges Gehäuse 7 auf, welches aus zwei gleichen Gehäuseschalen 7d zusammengesetzt und verschraubt ist. Jede der beiden Gehäuseschalen 7d ist symmetrisch und identisch aufgebaut. In dem Gehäuse 7 ist ein Rad 11 (siehe auch Figuren 3a-b, 4a-b, 5a-b) mit einer an seinem Umfang ausgebildeten Lauffläche 11a aufgenommen und hierbei um seine in der Einbaulage horizontal ausgerichtete Drehachse D drehbar gelagert angeordnet. Die Lauffläche 11a ist durch einen Spurkranz 11b begrenzt (siehe Figuren 3b, 4b, 5b).

Die zwei Gehäuseschalen 7d werden über mehrere, beispielsweise sechs Schraubverbindungen 7e, zu dem Gehäuse 7 verbunden, die vorzugsweise in gleicher Anzahl auf gegenüberliegenden Seiten der Drehachse D angeordnet sind. Zur Ausbildung der jeweiligen Schraubverbindungen 7e ist in jeder Gehäuseschale 7d eine Aufnahme 7f für ein Verschraubungselement vorgesehen, die vorzugsweise parallel zu der Drehachse D durch beide Gehäuseschalen 7d verläuft und beispielsweise eine zugehörige Schraube oder einen Bolzen aufnehmen kann. Die jeweilige Aufnahme 7f wird im Gehäuse 7 von einem Innenprofil 7c begrenzt, das somit nicht nur als Aufnahme 7f für Verschraubungselemente wie die vorgenannten Schrauben oder Bolzen dient, sondern auch als Versteifungselement.

Das Gehäuse 7 ist an seiner Unterseite offen, wodurch das als Laufrad ausgebildete Rad 11 in seiner Einbaulage an der Unterseite aus dem Gehäuse 7 herausragt und ansonsten von den übrigen fünf Seitenwänden des Gehäuses 7 umschlossen ist.

Der Radblock 6 kann über sein Gehäuse 7 an einer Anschlusskonstruktion befestigt werden, die beispielsweise ein Fahrwerksträger 5 eines Kranfahrwerks, insbesondere des Laufkrans 1, sein kann. Hierfür weist das Gehäuse 7 mindestens eine Anschlussfläche 8, die beispielsweise an einer der Unterseite gegenüberliegenden Seite angeordnet und dann auch als Kopfanschlussfläche bezeichnet werden kann. Für eine verdrehsichere Befestigung sind vorzugsweise mindestens zwei in einer Ebene liegende Anschlussflächen 8 vorgesehen. Im vorliegenden Ausführungsbeispiel sind vier Anschlussflächen 8 an der der offenen Unterseite gegenüberliegenden Außenwand 7b des Gehäuses 7 angeordnet, wobei je Gehäuseschale 7d zwei Anschlussflächen 8 vorgesehen sind. Jede Anschlussfläche 8 weist eine Anschlussbohrung 9 auf. Bei einer Montage des Radblocks 6 an dem Fahrwerksträger 5 kommt die jeweilige Anschlussfläche 8 zur Anlage an einer Gegenfläche (nicht dargestellt) an dem Fahrwerksträger 5, um hieran über in die Anschlussbohrungen 9 eingreifende Schrauben oder Bolzen befestigt zu werden. Die Anschlussbohrungen 9 können hierfür mit einem Gewinde versehen und entsprechender Weise als Gewindebohrung ausgebildet sein.

Der Radblock 6 weist innerhalb seines Gehäuses 7 eine Messvorrichtung 20 (siehe Figuren 3a-3b, 4a-4b, 5a-5b) zur Ermittlung des Abstands zwischen der Messvorrichtung 20 und dem Rad 11 auf, die vorzugsweise als analoger induktiver Abstandssensor ausgebildet ist. Anhand von Messsignalen bzw. Messdaten der Messvorrichtung 20 und deren Auswertung können damit etwaiger aktueller und/oder zukünftiger Verschleiß an dem Rad 11 und/oder eine Belastung, insbesondere ein unbelasteter Zustand und/oder ein Überlastzustand, des Radblocks 6 erkannt und/oder zu ermittelt und/oder prognostiziert werden.

Die Messvorrichtung 20 ist signalübertragend an eine Auswerteeinheit 12 und Speichereinheit 14 angeschlossen, im vorliegenden Ausführungsbeispiel mittels eines isolierten und abgeschirmten Kabels 13. Das Kabel 13 ist hierfür innerhalb des Gehäuses 7 über eine Führung zu einer Außenwandbohrung 7g in dem Gehäuse 7 und durch diese aus dem Gehäuse 7 herausgeführt. Die im Gehäuse 7 angeordnete Führung für das Kabel 13 zur Herstellung der signalübertragenden Verbindung zwischen der Messvorrichtung 20 und der Auswerteeinheit 12 und /oder Speichereinheit 14 kann dabei Teil einer Befestigungsvorrichtung 21 (siehe Figuren 3a-b, 4a-b und 5a-b) für die Messvorrichtung 20 sein; dies gilt unabhängig von der speziellen Ausführungsform der Befestigungsvorrichtung 21.

Die Messvorrichtung 20 ist mittels der Befestigungsvorrichtung 21 im Gehäuse 7 an dessen Innenwand 7a angebracht. Hierbei ist die Messvorrichtung 20 derart zu dem Rad 11 beabstandet angeordnet und in dem Gehäuse 7 gelagert, dass der Abstand von der Messvorrichtung 20 zum Rad 11, insbesondere zu dessen Lauffläche 11a, auch bei Erreichen der Verschleißgrenze des Rads 11 noch messbar ist.

Die mittels der Messvorrichtung 20 aufgenommenen Messsignale bzw. Messdaten werden über das Kabel 13 zur Auswertung und Speicherung an die Auswerteeinheit 12 und die Speichereinheit 14 übertragen. Eine weitere signalübertragende Verbindung besteht zwischen der Auswerteeinheit 12, der Speichereinheit 14 und einer Anzeige 15. Die Anzeige 15 dient dazu die Messsignale bzw. Messdaten und/oder die durch die Auswertung ermittelten Informationen anzuzeigen und kann zur Visualisierung einen Bildschirm und/oder Leuchtmittel wie beispielsweise eine oder mehrere LED-Lampen aufweisen. Die signalübertragende Verbindung für die Anzeige 15 kann dabei ebenfalls über ein Kabel 13 oder auch kabellos hergestellt werden.

Für die Befestigungsvorrichtung 21 und dementsprechend die Anbringung und Anordnung der Messvorrichtung 20 im Gehäuse 7 sind exemplarisch drei alternative Ausführungsformen in den Figuren 3a-b, 4a-b und 5a-b dargestellt. Die Ausführungen zum Gehäuse 7 gelten dabei für alle Ausführungsformen der Befestigungsvorrichtung 21 entsprechend.

Die Figuren 3a-b zeigen einen Querschnitt durch den Radblock 6, wobei die Befestigungsvorrichtung 21 gemäß dieser ersten Ausführungsform ein blockförmiges Formelement 21 umfasst, über welches die Messvorrichtung 20 an der Innenwand 7a angebracht ist. Dabei ist der zur Anbringung genutzte Abschnitt der Innenwand 7a Teil des Innenprofils 7c des Gehäuses 7, welches als Versteifungselement dient und auch mindestens eine Aufnahme 7f für ein Verschraubungselement aufweist. Die Befestigungsvorrichtung 21 beziehungsweise deren Formelement 21 ist darin mittels einer Schraubverbindung angebracht.

Die Messvorrichtung 20 ist dadurch zwischen der Innenwand 7a des Gehäuses 7 und dem Rad 11 so angeordnet, dass sie sich seitlich und oberhalb der Drehachse D des Rades 11 befindet und somit zwischen der Drehachse D und einer Ecke des Gehäuses 7 und insbesondere etwa auf einer gedachten direkten Verbindung zwischen der Drehachse D und der Ecke angeordnet ist. Das Innenprofil 7c des Gehäuses 7 und auch der zur Anbringung genutzte Abschnitt der Innenwand 7a, welcher hier Teil des Innenprofils 7c ist und als Versteifungselement dient sowie Aufnahmen 7f für Verschraubungselemente ausbildet, sind in gleicher Weise und unabhängig von der verwendeten Ausführungsform der Befestigungsvorrichtung 21 auch bei allen anderen Gehäusen 7 vorhanden.

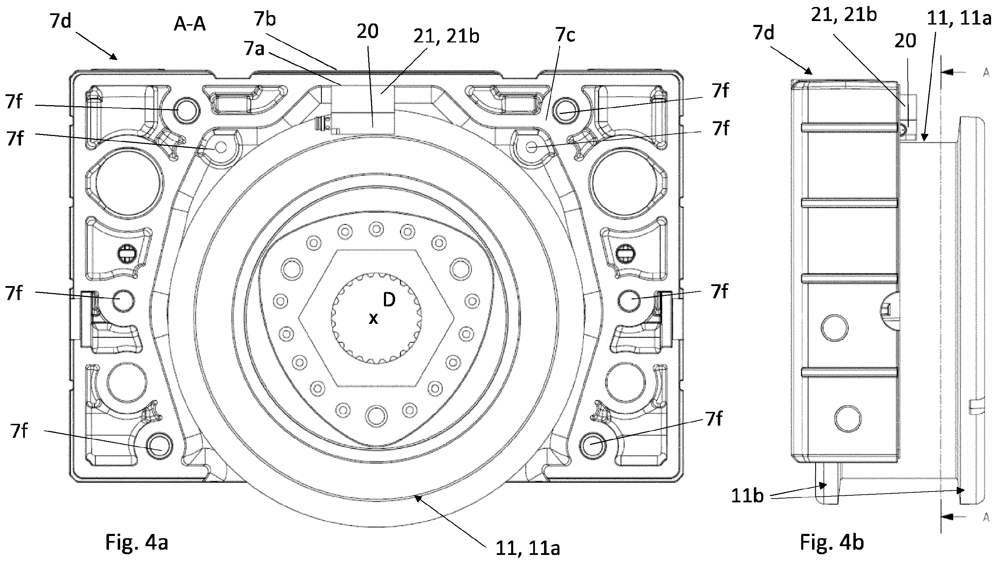

In den Figuren 4a-b ist ein Querschnitt durch den Radblock 6 dargestellt, wobei die Befestigungsvorrichtung 21 gemäß dieser zweiten Ausführungsform einen Distanzblock 21b umfasst, über welchen die Messvorrichtung 20 an der Innenwand 7a angebracht ist. Im zur Anbringung der Befestigungsvorrichtung 21 genutzten Abschnitt bildet die Innenwand 7a rückseitig eine Außenwand 7b des Gehäuses 7b aus. Dabei ist die Befestigungsvorrichtung 21 etwa mittig unterhalb der Oberseite des Gehäuses 7 angeordnet, wodurch die Messvorrichtung 20 oberhalb der Drehachse D des Rades 11 zwischen dem zur Anbringung genutzten Abschnitt der Innenwand 7a des Gehäuses 7 und dem Rad 11 angeordnet ist. Die Befestigungsvorrichtung 21 selbst kann mittels einer Schraubenverbindung an der Innenwand 7a des Gehäuses 7 angebracht werden.

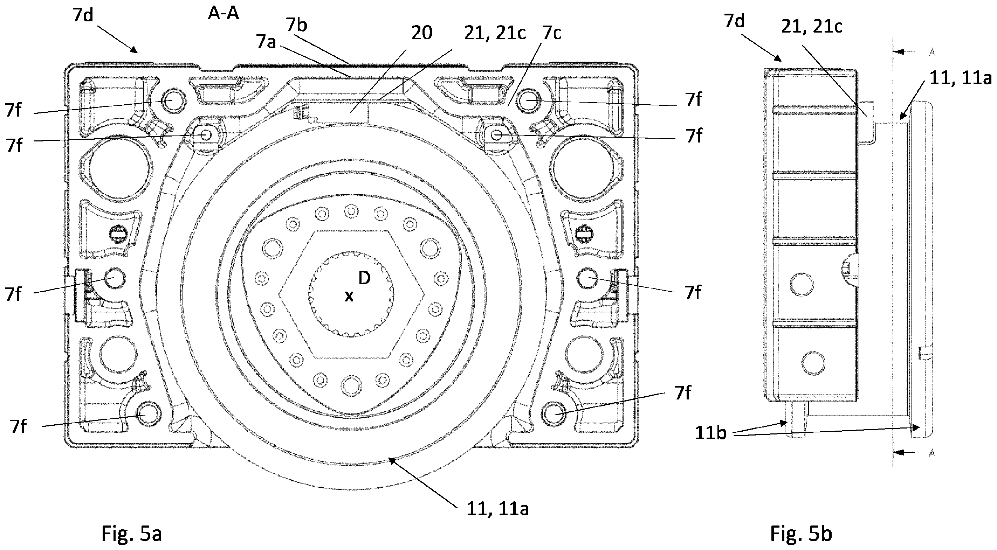

Die Figuren 5a-b zeigen einen Querschnitt durch den Radblock 6, wobei die Befestigungsvorrichtung 21 gemäß dieser dritten Ausführungsform ein als Befestigungsstrebe dienendes Halteblech 21c umfasst, über welches die Messvorrichtung 20 an der Innenwand 7a angebracht ist. Dabei sind die zur Anbringung genutzten Abschnitte der Innenwand 7a Teil des Innenprofils 7c des Gehäuses 7, welches als Versteifungselement dient und auch mehrere Aufnahmen 7f für jeweils ein Verschraubungselement aufweist. Diese Ausführungsform zeichnet sich dadurch aus, dass die Befestigungsvorrichtung 21 ähnlich wie bei der ersten Ausführungsform über bereits vorhandene Aufnahmepunkte in Form von Aufnahmen 7f in der Innenwand 7a beziehungsweise an dem Innenprofil 7c angebracht werden kann. Die Messvorrichtung 20 ist dadurch mittig zwischen den beiden Aufnahmepunkten bzw. Aufnahmen 7f und hierbei oberhalb des Rades 11 und dessen Drehachse D an der Innenwand 7a des Gehäuses 7 befestigt.

Im Übrigen gelten die Ausführungen zu Fig. 1 und 2 analog auch für die Fig. 3a-b, 4ab und 5a-b.

### Bezugszeichenliste

- 1: Laufkran
- 2: Kastenträger
- 3: Laufkatze
- 4: Hebezeug
- 5: Fahrwerksträger
- 6: Radblock
- 7: Gehäuse
- 7a: Innenwand
- 7b: Außenwand
- 7c: Innenprofil
- 7d: Gehäuseschale
- 7e: Schraubverbindung
- 7f: Aufnahme
- 7g: Außenwandbohrung
- 8: Anschlussfläche
- 9: Bohrung
- 10: Elektromotor
- 11: Rad
- 11a: Lauffläche
- 11b: Spurkranz
- 12: Auswerteeinheit
- 13: Kabel
- 14: Speichereinheit
- 15: Anzeige
- 20: Messvorrichtung
- 21: Befestigungsvorrichtung
- 21a: Formelement
- 21b: Distanzblock
- 21c: Halteblech
- 100: Schiene
- D: Drehachse
- k: Katzfahrrichtung
- K: Kranfahrrichtung

## Patentansprüche

1. Radblock (6), vorzugsweise für einen Laufkran (1), wobei der Radblock (6) ein Gehäuse (7) und ein in dem Gehäuse (7) gelagertes und aus dem Gehäuse (7) heraus ragendes Rad (11) umfasst, wobei das Gehäuse (7) des Radblocks (6) kastenförmig ausgebildet und an seiner Unterseite offen ist, wobei das Rad (11) dort durch eine Öffnung heraus ragt und ansonsten von den übrigen Seitenwänden des Gehäuses (7) umschlossen ist, **dadurch gekennzeichnet, dass** der Radblock (6) eine berührungslos arbeitende Messvorrichtung (20) zur Ermittlung des Abstands zwischen der Messvorrichtung (20) und dem Rad (11) aufweist, um anhand von Messsignalen bzw. Messdaten der Messvorrichtung (20) und deren Auswertung etwaigen aktuellen und/oder zukünftigen Verschleiß an dem Rad (11) und/oder eine Belastung, insbesondere einen unbelasteten Zustand und/oder einen Überlastzustand, des Radblocks (6) zu erkennen und/oder zu ermitteln und/oder zu prognostizieren, wobei die Messvorrichtung (20) zwischen einer Innenwand (7a) des Gehäuses (7) und dem Rad (11) angeordnet und an der Innenwand (7a) angebracht ist.

2. Radblock (6) nach dem vorherigen Anspruch, **dadurch gekennzeichnet, dass** die Messvorrichtung (20) einen induktiven Abstandssensor, vorzugsweise einen analogen induktiven Abstandssensor, umfasst.

3. Radblock (6) nach einem der vorherigen Ansprüche, **dadurch gekennzeichnet, dass** die Messvorrichtung (20) hierbei so positioniert ist, dass sie in der Einbaulage des Radblocks (6) oberhalb oder oberhalb und seitlich einer Drehachse (D) des Rades (11) und vorzugsweise am unteren Ende ihres Messbereichs liegt.

4. Radblock (6) nach dem vorherigen Anspruch, **dadurch gekennzeichnet, dass** die Messvorrichtung (20) mittels einer Befestigungsvorrichtung (21), vorzugsweise umfassend ein, insbesondere blockförmiges, Formelement (21a) und/oder einen Distanzblock (21b) und/oder eine Befestigungsstrebe, vorzugsweise in Form eines Halteblechs (21b), an einem Abschnitt der Innenwand (7a) angebracht ist, wobei der zur Anbringung genutzte Abschnitt der Innenwand (7a) rückseitig eine Außenwand (7b) des Gehäuses (7) ausbildet oder Teil eines Innenprofils (7c) des Gehäuses (7) ist, wobei das Innenprofil (7c) als Versteifungselement und/oder Aufnahme (7f) für ein Verschraubungselement dient.

5. Radblock (6) nach einem der vorherigen Ansprüche, **dadurch gekennzeichnet, dass** das Gehäuse (7) mindestens eine äußere Anschlussfläche (8) mit mindestens einer Bohrung (9) aufweist, über die das Gehäuse (7) an einer Anschlusskonstruktion, vorzugsweise einem tragenden Strukturteil eines Laufkrans (1), insbesondere eines Fahrwerksträgers des Laufkrans (1), befestigbar ist, wobei das Gehäuse (7) vorzugsweise zwei Gehäuseschalen (7d) umfasst, die vorzugsweise symmetrisch und identisch ausgebildet sind und zur Ausbildung des Gehäuses (7) lösbar miteinander verbindbar sind, insbesondere mittels einer Verschraubung.

6. System mit einem Radblock (6) nach einem der vorherigen Ansprüche und mit einer Auswerteeinheit (12) und/oder einer Speichereinheit (14), wobei die Auswerteeinheit (12) und/oder die Speichereinheit (14) jeweils signalübertragend miteinander und/oder mit der Messvorrichtung (20) verbindbar sind, um Messsignale bzw. Messdaten, insbesondere als Rohsignale bzw. Rohdaten, der Messvorrichtung (20) mittels der Speichereinheit (14) zu speichern und/oder mittels der Auswerteeinheit (12) auszuwerten und durch die Auswertung ermittelte Informationen über den aktuellen und/oder prognostizierten Verschleiß des Rades (11), vorzugsweise einschließlich einer Berechnung von Wartungsintervallen, und/oder über eine Belastung, insbesondere einen unbelasteten Zustand und/oder einen Überlastzustand, des Radblocks (6) mittels der Speichereinheit (14) zu speichern.

7. System nach dem vorherigen Anspruch, **dadurch gekennzeichnet, dass** die Speichereinheit (14) einen cloudbasierten Webserver und/oder einen lokalen Datenträger umfasst, um die Messsignale bzw. Messdaten und/oder die durch deren Auswertung ermittelten Informationen zu speichern.

8. System nach einem der vorherigen Ansprüche, **dadurch gekennzeichnet, dass** die Auswerteeinheit (12) und/oder die Speichereinheit (14) signalübertragend mit einer Anzeige (15) verbindbar sind, um einer Bedienperson die Messsignale bzw. Messdaten und/oder die durch die Auswertung ermittelten Informationen anzuzeigen, wobei die Anzeige (15) zur Visualisierung der Messsignale bzw. Messdaten und/oder Informationen einen Bildschirm und/oder oder ein Leuchtmittel, vorzugsweise mindestens eine LED-Lampe, zur Anzeige von, vorzugsweise verschiedenfarbigen, Lichtsignalen aufweisen kann.

9. Laufkran (1), insbesondere Brückenkran oder Portalkran, mit einem Radblock (6) und/oder System nach einem der vorherigen Ansprüche.

10. Verfahren zum Betreiben eines Systems oder Laufkrans (1) nach einem der vorherigen Ansprüche, wobei die Auswerteeinheit (12) Messsignale bzw. Messdaten, insbesondere als Rohsignale bzw. Rohdaten, der Messvorrichtung (20) erhält und in einer definierten Auswertungsfrequenz auswertet, um etwaigen aktuellen und/oder zukünftigen Verschleiß an dem Rad (11) und/oder die Belastung des Radblocks (6) zu erkennen und/oder zu ermitteln und/oder zu prognostizieren und/oder wobei Messsignale bzw. Messdaten, insbesondere als Rohsignale bzw. Rohdaten, der Messvorrichtung (20) und/oder durch deren Auswertung mittels der Auswerteeinheit (12) ermittelte Informationen über den aktuellen und/oder prognostizierten Verschleiß des Rades (11), vorzugsweise einschließlich einer Berechnung von Wartungsintervallen, und/oder über die Belastung des Radblocks (6) mittels der Speichereinheit (14) gespeichert werden.

11. Verfahren nach dem vorherigen Anspruch, **dadurch gekennzeichnet, dass** zur Auswertung einer oder mehrere der folgenden Schritte durchgeführt werden:
- Bilden von arithmetischen Mittelwerten der Messsignale bzw. Messdaten, insbesondere der Rohsignale bzw. Rohdaten
- Nutzen der Mittelwerte für die Generierung von Grenzwerten und/oder Grenzbereichen des Verschleißes und/oder der Belastung
- Nutzen eines Filterverfahrens, insbesondere mit einem Hoch- und/oder Tiefpassfilter, für die Generierung von Grenzwerten und/oder Grenzbereichen des Verschleißes und/oder der Belastung
- Nutzen von statistischen Glättungsverfahren, insbesondere des 3 Punkt Median Verfahrens, um die während des Betriebs aufgrund von Unebenheiten oder elektronischen Messsignalstörungen auftretenden Extremwerte und Ausreißer zu eliminieren
- Erstellen von Informationen über den aktuellen und/oder prognostizierten Verschleiß des Rades (11), vorzugsweise einschließlich einer Berechnung von Wartungsintervallen, und/oder über die Belastung des Radblocks (6).

12. Verfahren nach dem vorherigen Anspruch, wobei die Messsignale bzw. Messdaten und/oder die durch die Auswertung ermittelten Informationen von einer Bedienperson abgerufen und/oder einer Bedienperson über die Anzeige (15) visualisiert werden.

13. Verfahren nach einem der Ansprüche 10 oder 11, wobei jeweils der Abstand zwischen der Messvorrichtung (20) und dem Rad (11), insbesondere dessen Lauffläche (11a), gemessen und hieraus beziehungsweise aus deren Veränderungen Rückschlüsse auf Form und/oder Durchmesser des Rades (11) und damit aktuellen oder zukünftigen Verschleiß und/oder die Belastung gezogen werden.

14. Verfahren nach einem der Ansprüche 10 bis 12, wobei je nach Grad des Verschleißes als Information über den Status des Radblocks (6) eine zu erwartende Lebenszeit und ein Termin für ein Serviceintervall für den Radblock (6) angezeigt werden.

## Claims

1. A wheel block (6), preferably for a travelling crane (1), wherein the wheel block (6) comprises a housing (7) and a wheel (11) mounted in the housing (7) and projecting from the housing (7), wherein the housing (7) of the wheel block (6) is box-shaped and open on its underside, with the wheel (11) protruding through an opening there and otherwise enclosed by the remaining side walls of the housing (7), **characterized in that** the wheel block (6) comprises a non-contact measuring device (20) for determining the distance between the measuring device (20) and the wheel (11), in order to detect and/or determine and/or predict, based on measurement signals or measurement data from the measuring device (20) and their evaluation, any current and/or future wear on the wheel (11) and/or a load condition, in particular an unloaded state and/or an overloaded state, of the wheel block (6), wherein the measuring device (20) is arranged between an inner wall (7a) of the housing (7) and the wheel (11) and is mounted on the inner wall (7a) .

2. Wheel block (6) according to the preceding claim, **characterized in that** the measuring device (20) comprises an inductive distance sensor, preferably an analog inductive distance sensor.

3. Wheel block (6) according to any one of the preceding claims, **characterized in that** the measuring device (20) is positioned such that, in the installed position of the wheel block (6), it lies above or above and to the side of a rotational axis (D) of the wheel (11) and, preferably, at the lower end of its measuring range.

4. Wheel block (6) according to the preceding claim, **characterized in that** the measuring device (20) is attached by means of a fastening device (21), preferably comprising a, in particular block-shaped, shaped element (21a) and/or a spacer block (21b) and/or a mounting strut, preferably in the form of a retaining plate (21b), to a section of the inner wall (7a), wherein the section of the inner wall (7a) used for mounting forms the rear side of an outer wall (7b) of the housing (7) or is part of an internal profile (7c) of the housing (7), wherein the internal profile (7c) serves as a stiffening element and/or a receptacle (7f) for a fastening element.

5. Wheel block (6) according to any of the preceding claims, **characterized in that** the housing (7) has at least one outer mounting surface (8) with at least one bore (9), via which the housing (7) can be attached to a connecting structure, preferably a load-bearing structural component of a travelling crane (1), in particular a trolley beam of the travelling crane (1), wherein the housing (7) preferably comprises two housing shells (7d) that are preferably symmetrical and identical in design and can be detachably connected to one another to form the housing (7), in particular by means of a screw connection.

6. A system comprising a wheel block (6) according to any one of the preceding claims and comprising an evaluation unit (12) and/or a storage unit (14), wherein the evaluation unit (12) and/or the storage unit (14) can each be connected to one another and/or to the measuring device (20) for signal transmission, in order to store measurement signals or measurement data, in particular as raw signals or raw data, from the measuring device (20) to be stored by the storage unit (14) and/or evaluated by the evaluation unit (12), and information determined by the evaluation regarding the current and/or predicted wear of the wheel (11), preferably including a calculation of maintenance intervals, and/or regarding a load condition, in particular an unloaded state and/or an overloaded state, of the wheel block (6) via the storage unit (14).

7. System according to the preceding claim, **characterized in that** the storage unit (14) comprises a cloud-based web server and/or a local data storage medium for storing the measurement signals or measurement data and/or the information determined by their evaluation.

8. System according to any of the preceding claims, **characterized in that** the evaluation unit (12) and/or the storage unit (14) can be connected via a signal transmission link to a display (15) in order to display the measurement signals or measurement data and/or the information determined by the evaluation to an operator, wherein the display (15) may comprise a screen and/or a light source, preferably at least one LED, for visualizing the measurement signals or measurement data and/or information by displaying, preferably differently colored, light signals.

9. A travelling crane (1), in particular a bridge crane or gantry crane, comprising a wheel block (6) and/or a system according to one of the preceding claims.

10. A method for operating a system or travelling crane (1) according to any of the preceding claims, wherein the evaluation unit (12) receives measurement signals or measurement data, in particular as raw signals or raw data, from the measuring device (20) and evaluates them at a defined evaluation frequency in order to detect and/or determine and/or predict any current and/or future wear on the wheel (11) and/or the load on the wheel block (6), and/or wherein measurement signals or measurement data, in particular raw signals or raw data, from the measuring device (20) and/or information regarding the current and/or predicted wear of the wheel (11) determined through their evaluation by the evaluation unit (12), preferably including a calculation of maintenance intervals, and/or regarding the load on the wheel block (6) are stored by the storage unit (14).

11. Method according to the preceding claim, **characterized in that**, for the purpose of evaluation, one or more of the following steps are performed:
- calculating arithmetic averages of the measurement signals or measurement data, in particular the raw signals or raw data
- using the averages to generate threshold values and/or threshold ranges for wear and/or load
- using a filtering method, in particular with a high-pass and/or low-pass filter, to generate threshold values and/or threshold ranges for wear and/or load
- using statistical smoothing methods, in particular the 3-point median method, to eliminate extreme values and outliers that occur during operation due to surface irregularities or electronic measurement signal interference
- generating information about the current and/or predicted wear of the wheel (11), preferably including a calculation of maintenance intervals, and/or about the load on the wheel block (6).

12. Method according to the preceding claim, wherein the measurement signals or measurement data and/or the information determined by the evaluation are retrieved by an operator and/or visualized for an operator via the display (15).

13. Method according to any one of claims 10 or 11, wherein the distance between the measuring device (20) and the wheel (11), in particular its tread (11a), is measured in each case, and conclusions regarding the shape and/or diameter of the wheel (11) and thus current or future wear and/or the load are drawn from this measurement or from changes therein.

14. Method according to any one of claims 10 through 12, wherein, depending on the degree of wear, an expected service life and a date for a service interval for the wheel block (6) are displayed as information regarding the status of the wheel block (6).

## Revendications

1. Bloc de roue (6), destiné notamment à une grue mobile (1), le bloc de roue (6) comprenant un boîtier (7) et une roue (11) logée dans le boîtier (7) et faisant saillie du boîtier (7), le boîtier (7) du bloc de roue (6) étant en forme de caisson et ouvert sur sa face inférieure, la roue (11) faisant saillie par une ouverture et étant par ailleurs enfermée par les parois latérales restantes du boîtier (7), **caractérisée en ce que** le bloc de roue (6) comporte un dispositif de mesure sans contact (20) permettant de déterminer la distance entre le dispositif de mesure (20) et la roue (11) afin de détecter et/ou déterminer et/ou prédire toute usure actuelle et/ou future de la roue (11) et/ou une charge, en particulier un état à vide et/ou un état de surcharge, du bloc de roue (6) sur la base de signaux de mesure ou de données de mesure du dispositif de mesure (20) et de leur évaluation, le dispositif de mesure (20) étant disposé entre une paroi intérieure (7a) du boîtier (7) et la roue (11) et étant fixé à la paroi intérieure (7a).

2. Bloc de roue (6) selon la revendication précédente, **caractérisé en ce que** le dispositif de mesure (20) comprend un capteur de distance inductif, de préférence un capteur de distance inductif analogique.

3. Bloc de roue (6) selon l'une des revendications précédentes, **caractérisé en ce que** le dispositif de mesure (20) est pour cela positionné de telle sorte que, dans la position d'installation du bloc de roue (6), il soit situé au-dessus ou au-dessus et sur le côté d'un axe de rotation (D) de la roue (11) et de préférence à l'extrémité inférieure de sa plage de mesure.

4. Bloc de roue (6) selon la revendication précédente, **caractérisé en ce que** le dispositif de mesure (20) est fixé à une portion de la paroi intérieure (7a) au moyen d'un dispositif de fixation (21), comprenant de préférence un élément (21a) profilé en forme de bloc et/ou un bloc d'espacement (21b) et/ou une entretoise de fixation, de préférence sous la forme d'une plaque de retenue (21b), la portion de la paroi intérieure (7a), utilisée pour le montage, formant une paroi extérieure (7b) du boîtier (7) sur la face arrière ou faisant partie d'un profil intérieur (7c) du boîtier (7), le profil intérieur (7c) servant d'élément de rigidification et/ou de réceptacle (7f) pour un élément de vissage.

5. Bloc de roue (6) selon l'une des revendications précédentes, **caractérisé en ce que** le boîtier (7) comporte au moins une surface de raccordement extérieure (8) avec au moins un alésage (9) par lequel le boîtier (7) peut être fixé à une structure de raccordement, de préférence une partie structurelle porteuse d'une grue mobile (1), en particulier un support de mécanisme de roulement de la grue mobile (1), le boîtier (7) comprenant de préférence deux coques de boîtier (7d) qui sont de préférence symétriques et identiques et qui peuvent être reliées de manière détachable l'une à l'autre pour former le boîtier (7), notamment par vissage.

6. Système comprenant un bloc de roue (6) selon l'une des revendications précédentes et une unité d'évaluation (12) et/ou une unité de stockage (14), l'unité d'évaluation (12) et/ou l'unité de stockage (14) pouvant être reliées entre elles et/ou au dispositif de mesure (20) à chaque fois en transmission de signal afin de stocker les signaux de mesure ou les données de mesure, notamment sous forme de signaux bruts ou de données brutes, du dispositif de mesure (20) au moyen de l'unité de stockage (14) et/ou de les évaluer au moyen de l'unité d'évaluation (12) et de stocker les informations obtenues par l'évaluation concernant l'usure actuelle et/ou prévue de la roue (11), de préférence incluant un calcul d'intervalles de maintenance, et/ou concernant une charge, notamment un état à vide et/ou un état de surcharge, du bloc de roue (6) au moyen de l'unité de stockage (14).

7. Système selon la revendication précédente, **caractérisé en ce que** l'unité de stockage (14) comprend un serveur web basé dans le Cloud et/ou un support de données local pour stocker les signaux de mesure ou les données de mesure et/ou les informations obtenues par leur évaluation.

8. Système selon l'une des revendications précédentes, **caractérisé en ce que** l'unité d'évaluation (12) et/ou l'unité de stockage (14) peuvent être reliées à un affichage (15) en transmission de signal afin d'afficher à un opérateur les signaux de mesure ou les données de mesure et/ou les informations obtenues par l'évaluation, l'affichage (15) destiné à visualiser les signaux de mesure ou les données et/ou les informations de mesure pouvant comporter un affichage et/ou un moyen d'éclairage, de préférence au moins une lampe LED, pour afficher des signaux lumineux, de préférence de couleurs différentes.

9. Grue mobile (1), notamment pont roulant ou portique, comprenant un bloc de roue (6) et/ou un système selon l'une des revendications précédentes.

10. Procédé de fonctionnement d'un système ou d'une grue mobile (1) selon l'une quelconque des revendications précédentes, l'unité d'évaluation (12) recevant des signaux de mesure ou des données de mesure, notamment sous forme de signaux bruts ou de données brutes, du dispositif de mesure (20) et les évaluant à une fréquence d'évaluation définie afin de détecter et/ou déterminer et/ou prédire toute usure actuelle et/ou future de la roue (11) et/ou la charge du bloc de roue (6), des signaux de mesure ou des données de mesure, en particulier sous forme de signaux bruts ou de données brutes, du dispositif de mesure (20) et/ou des informations, déterminées par leur évaluation au moyen de l'unité d'évaluation (12), sur l'usure actuelle et/ou prévue de la roue (11), de préférence incluant un calcul d'intervalles de maintenance, et/ou sur la charge du bloc de roue (6) étant stockées au moyen de l'unité de stockage (14).

11. Procédé selon la revendication précédente, **caractérisé en ce que** pour l'évaluation une ou plusieurs des étapes suivantes sont réalisées :
- calculer des valeurs moyennes arithmétiques des signaux de mesure ou des données de mesure, notamment des signaux bruts ou des données brutes,
- utiliser les valeurs moyennes pour générer des valeurs limites et/ou des plages limites de l'usure et/ou de la charge,
- utiliser un procédé de filtrage, notamment avec un filtre passe-haut et/ou passe-bas, pour générer des valeurs limites et/ou des plages limites de l'usure et/ou de la charge,
- utiliser des procédés de lissage statistique, en particulier le procédé de la médiane à 3 points, pour éliminer les valeurs extrêmes et les valeurs aberrantes qui surviennent pendant le fonctionnement en raison d'irrégularités ou d'interférences électroniques de signaux de mesure,
- générer des informations sur l'usure actuelle et/ou prévue de la roue (11), de préférence incluant un calcul d'intervalles de maintenance, et/ou sur la charge du bloc de roue (6).

12. Procédé selon la revendication précédente, les signaux de mesure ou les données de mesure et/ou les informations obtenues par l'évaluation étant récupérés par un opérateur et/ou visualisés par un opérateur sur l'affichage (15).

13. Procédé selon l'une des revendications 10 ou 11, la distance entre le dispositif de mesure (20) et la roue (11), en particulier sa surface de roulement (11a), étant à chaque fois mesurée et des conclusions sur la forme et/ou le diamètre de la roue (11) et donc sur l'usure actuelle ou future et/ou la charge étant tirées de ladite distance ou de ses variations.

14. Procédé selon l'une des revendications 10 à 12, une durée de vie prévue et une date limite pour un intervalle de maintenance du bloc de roue (6) sont affichées comme information sur l'état du bloc de roue (6) en fonction du degré d'usure.
